# EUROPÄISCHE PATENTSCHRIFT

(11) **EP 1 676 214 B1**
(45) Veröffentlichungstag und Bekanntmachung des Hinweises auf die Patenterteilung: **13.02.2008**
(21) Anmeldenummer: 04766878.5
(22) Anmeldetag: 06.10.2004
(51) Int. Cl.: G06F 17/30, H04M 15/00

(54) **VERFAHREN ZUR BEARBEITUNG VON CDR-INFORMATIONEN**
METHOD FOR CDR DATA PROCESSING
PROCEDE DE TRAITEMENT D'INFORMATIONS CDR

(30) Priorität: 06.10.2003 DE 10346802
(43) Veröffentlichungstag der Anmeldung: 05.07.2006
(73) Patentinhaber: belerofon GmbH, 47877 Willich (DE)
(72) Erfinder: BAUM, Philip, 47877 Willich (DE); GITZEL, Peter, 40479 Düsseldorf (DE)
(74) Vertreter: Kewitz, Ansgar
(86) Internationale Anmeldenummer: PCT/EP2004/052458
(87) Internationale Veröffentlichungsnummer: WO 2005/038669

(56) Entgegenhaltungen:
- EP-A- 0 726 537
- US-A1- 2003 081 755
- US-B1- 6 385 301
- US-B1- 6 535 908

## Beschreibung

Die Erfindung betrifft ein Verfahren zur Analyse und Bearbeitung, insbesondere Korrektur einer Menge von Call Detail Records (CDRs).

### Gebiet der Erfindung:

Verschiedenste Netzelemente von Mobilfunkbetreibern oder anderen Dienstleistern (Finanzinstitute, Energieunternehmen, Internetserviceprovider) erzeugen servicerelevante Daten, so genannte Call Detail Records (CDRs), die zum Großteil in die Rechnungserstellung einfließen. Die meisten CDRs liegen in proprietären binären Formaten vor und werden von so genannten Mediation Devices u. a. eingesammelt, aggregiert und auf interne oder standardisierte Datenformate zur Weiterverarbeitung innerhalb einer Abrechnungskette abgebildet.

Die Abrechnungskette, die die Verarbeitung dieser servicerelevanten Abrechnungsdaten vornimmt, ist ein hoch komplexes, mehrstufiges Softwaresystem, das meist von verschiedenen Hard- und Softwarelieferanten realisiert wurde. Durch die Komplexität und die ständig anfallenden Änderungswünsche kommt es permanent vor, dass ein gewisser Teil der Abrechnungsdaten fehlerbehaftet ist und dadurch nicht abgerechnet werden kann. Unabhängige Branchenkennzahlen sprechen von ca. 2-5% Verlusten.

Aus der Druckschrift EP A 0726 537 ist ein Verfahren zum Überprüfen einer großen Menge an Daten, die in eine Datenbank gelesen werden, bekannt.

Aus der Druckschrift US 6 385 301 B1 ist ein Verfahren zum Sammeln von CDRs bekannt, die in eine Datenbank geladen werden.

Aus der Druckschrift US 6 535 908 ist ein Verfahren bekannt, das einen oder mehrerCASCII-Datenströme verarbeitet.

Aus der Druckschrift US 2003/0081755 A1 ist eine Vorrichtung zum Empfangen von CDRs bekannt.

### Aufgabe der Erfindung:

Aufgabe der Erfindung ist es, ein Analyse- und Korrekturverfahren bereitzustellen, mit dem es möglich ist, abrechnungsrelevante Daten allgemeingültig zu analysieren, Fehler zu finden, diese zu reparieren und die reparierten Daten der Abrechnungskette wieder zuzuführen.

Diese Aufgabe wird erfindungsgemäß durch ein Verfahren zur Analyse und anschließender Bearbeitung von einer Menge von Call Detail Records (CDRs) gelöst, welches einen Initialisierungsschritt, bei dem aus einem ersten Speicherbereich Strukturinformationen der Call Detail Records geladen werden und anhand dieser eine relationale Datenbank aufgebaut wird, wobei hierarchische Strukturinformationen durch mindestens zwei miteinander rekursiv in Relation stehenden Tabellen dargestellt werden, die die Hierarchie abbilden, einen weiteren Schritt, bei dem aus einem zweiten Speicherbereich die vorzugsweise binär vorliegende Menge von Call Detail Records unter Benutzung eines Decoders in ein lesbares Format der Datenbank umgewandelt wird, insbesondere in das ASCII-Format, einen weiteren Schritt, bei dem von Decoder bereitgestellten lesbare Call Detail Records entsprechend der Strukturinformationen in die Datenbank geladen werden, die im Initialisierungsschritt erzeugt wurde, einen weiteren Schritt, bei dem SQL-Queries und/oder Datenbankprozeduren verwendet werden, um fehlerhafte Call Detail Records zu bestimmen und einen weiteren Schritt, bei dem mit Hilfe der Strukturinformationen und einem formatspezifischen Encoder die Call Detail Records auf der Basis der Strukturinformation und der Datenbank im ursprünglichen Format, vorzugsweise im Binärformat, in einen dritten Speicherbereich zurückgespeichert werden, umfasst. Vorteilhafte Weiterbildungen der Erfindungen sind in den Unteransprüchen gekennzeichnet.

Dies wird im Wesentlichen dadurch erreicht, dass in einer Konfigurationsdatei Strukturinformationen hinterlegt sind, die die Grammatik der CDRs wiedergeben. Diese Dateien werden eingelesen und es wird eine relationale Datenbank auf der Grundlage der Grammatik erzeugt. Hierbei ist insbesondere zu beachten, dass hierarchische Grammatikkonstrukte, die Rekursionen erlauben, durch eine 1:N Verknüpfung dargestellt werden. Nach dem Erstellen der Datenbank werden die CDRs in die Datenbank eingelesen, um dann mit frei definierbaren oder vorgegebenen SQL-Queries nach Fehlern zu suchen, die ggf. auch automatisch korrigiert werden können. Nach der Korrektur werden die CDRs aus der Datenbank auf der Basis der Strukturinformationen ausgelesen und im ursprünglichen Format abgespeichert.

Das System stellt hierdurch Funktionen zur Analyse und Behebung von Fehlern in vom Mediation Device gesammelten oder erzeugten CDRs mit abrechnungsrelevanten Daten aus beliebigen Datenquellen zur Verfügung. Dazu ist es nötig, diverser CDRs Formate für schnelle Suche zwischenzuspeichern, fehlerhafte zu erkennen und zu analysieren. Das erfindungsgemäße Korrekturverfahren ist zur Unterstützung von Massenupdates ausgelegt.

Fehler in den CDRs haben die Eigenschaft, mehrfach und über längere Zeit aufzutreten; deshalb ist eine Wiederholbarkeit von Analysen und Korrekturmaßnahmen verfügbar. Das erfindungsgemäße System ermöglicht ebenfalls eine lückenlose Rückverfolgung und Wiederverwendung aller gemachten Korrekturen, indem protokolliert wird, wer zu welchem Zeitpunkt welche Änderung vorgenommen hat. Dies wird durch das Anlegen von Kopien erreicht, auf denen alle Änderungsoperationen durchgeführt werden. Des Weiteren bietet das System Revisionssicherheit, d. h. dass zu jedem späteren Zeitpunkt mit den gleichen Eingangsdaten die Korrekturen erneut durchgeführt werden können und zu den gleichen Endergebnissen führen.

Eine weitere Systemeigenschaft ist die Unterstützung der Benutzer mit Anzeigen und Sortiermöglichkeiten zur optimalen Darstellung von Suchergebnissen und von vorgenommenen Korrekturen.

So stehen in der bevorzugten Ausführungsform folgende Systemfunktionen zur Verfügung: Eingabefunktionen und Zwischenspeicherung von Modifikationen, dynamische Bestimmung der Strukturdefinition der Eingabe-CDRs, Abbildung der Strukturdefinition auf die zwischenspeichernde Datenbank, leistungsfähige Eingabeschnittstellen in die Datenbank, Laden in eine relationale Datenbankinstanz, Import von durch Wildcards identifizierten Dateien, Importformatierung mittels der Strukturdefinitionen, Wiederaufsetzen bei defekten Bereichen, Header- und Trailertest, insbesondere für das TAP3-Format, Behandlung von defekten Bereichen in CDR-Dateien nach definierten Mustern, Suchfunktionen, Definition von Ergebnismengen basierend auf SQL- oder PLSQL-Abfragesprache, weitere Verfeinerung von Ergebnismengen mit PL/SQL, Sortierung und Gruppierung von Ergebnismengen mit Standard-SQL, Export- und Dumpmöglichkeit der Oracle-Datenbank, so dass die Daten für die Weiterverarbeitung in das Billing-System übergeben werden können. Die folgenden Bearbeitungsfunktionen stehen dabei zur Verfügung: Bearbeitung der Ergebnismenge mit Standard SQL/PLSQL-Update-Anweisungen, Bearbeitung der Ergebnismenge mit PL/SQLDatenbank-Prozeduren, Zuordnung einer Korrekturnummer zu einer Ergebnismenge (Revision Control Mode), Bearbeitung der Ergebnismenge mit PL/SQL-DatenbankProzeduren innerhalb der Benutzeroberfläche, Freigabe oder Rücknahme einer Korrektur, Änderungsprotokollierung, Protokollierung von WER macht WANN, WAS und WIE und der Ausgaben mit Zuordnung zu den Korrekturnummern, Ausgabefunktionen, Zuordnung von Dateinamen zu den Ausgaben, Vermerk des korrekten Endes einer Ausgabe, Ausgabemöglichkeit der korrigierten CDRs und optional der ursprünglichen CDRs oder kompletter Eingabefiles, Erzeugung des zum Eingabeformat identischen Ausgabeformats mit den vorhandenen Strukturdefinitionen, Auflistung der ins System geladenen CDR-Dateien. Zur vereinfachten Bearbeitung steht eine Benutzeroberfläche zur Verfügung, die intuitiv zu bedienen ist. Es wird darauf hingewiesen, dass das System im Rahmen der beanspruchten Erfindung auch aus Unterkombinationen der o. g. Funktionen bestehen kann.

Im Folgenden wird die Erfindung anhand von Ausführungsbeispielen näher erläutert, die in der Figur schematisch dargestellt sind. Im Einzelnen zeigt:

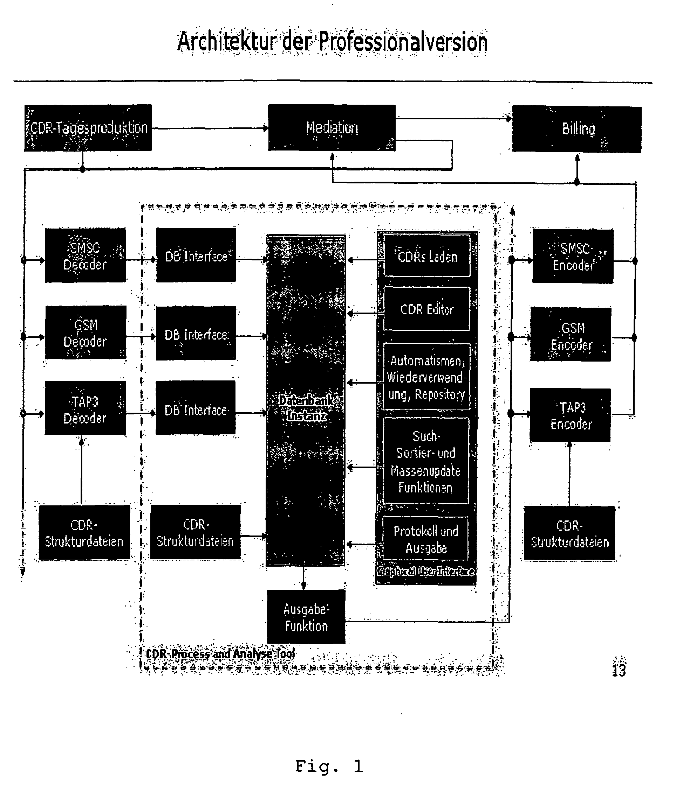

- Fig. 1: den strukturierten Aufbau der vorliegenden Erfindung.

Die zu analysierenden CDR-Tagesproduktionen-Daten liegen in einem Arbeitsverzeichnis in Dateiform vor. Anhand des Dateinamens oder durch Benutzerangabe werden das Recordformat und die Formatversion der CDRs bestimmt. Innerhalb einer Datei dürfen nur CDRs eines Recordformates in einer Version enthalten sein. Welche CDR-Dateien zu laden sind, wird vom Benutzer festgelegt.

Anhand des erkannten Recordformates werden mit Hilfe der Strukturdateien Datenbanktabellen angelegt. Die Daten können dann mit dem formatabhängigem Decoder (GSM, TAP3, Mediation, u. a.) decodiert und in die Datenbank geladen werden.

Sowohl die Funktionsweise der Decoder, Encoder als auch die automatisierte Abbildung der Datenbeschreibungssprache auf eine relationale Datenbank wird in der bevorzugten Ausführungsform über die Strukturdatei bestimmt.

Die Decoder haben in der bevorzugten Ausführungsform Methoden, um defekte Bereiche innerhalb von CDR-Dateien zu erkennen, wieder aufzusetzen, zu überspringen und Korrekturen vorzubereiten. Zusätzlich sind die Decoder mit Testfunktionen und Dumpmöglichkeiten ausgestattet.

Durch die Verwendung einer relationalen Datenbank stehen alle Möglichkeiten der SQL-Sprache, der PL/SQL-prozeduralen Datenbanksprache und Programme mit Dialog im Zeilenmodus zur Verfügung. So können weiterhin 3rd-Party-Tools benutzt werden, um auf die Tabellen zuzugreifen, zu suchen und Veränderungen vorzunehmen.

Die in der bevorzugten Ausführungsform vorliegende Benutzeroberfläche beinhaltet in ihrem Bearbeitungsteil Benutzerdialoge zum Suchen, Darstellen, Korrigieren und Protokollieren von Ergebnissen. Für größtmögliche Flexibilität können in der Oberfläche SQL-Anweisungen und PL/SQL-Datenbankprogramme definiert und für spätere Wiederverwendung abgespeichert werden. Zur Darstellung und Manipulation ist ein CDR-Editor integriert. Ist ein Fehler gefunden und die betroffenen Daten selektiert worden, so können diese innerhalb der Oberfläche mit Massenupdatefunktionen korrigiert werden. Alle Änderungen werden persistent und tagesgenau protokolliert und stehen für Revisionszwecke zur Verfügung, indem auf Kopien gearbeitet wird. Auch die Oberfläche kann ihr Layout, wie z. B. die Anordnung der Fenster, speichern und wieder verwenden.

Die CDR-Strukturdateien sind eine Abbildung der CDR-Spezifikationen bzw. Grammatik. Alle Feldbeschreibungen und die zugehörigen Wertebereiche für verschiedene Netzelemente sind in ihnen abgelegt. Sie werden direkt aus den Spezifikationen der Netzwerkausrüster erstellt. Zu einer Version eines Formats existiert immer nur eine Strukturdatei. Alle Module greifen auf diese eine Strukturdatei zur Formatbeschreibung zu. Dies hat den Vorteil, dass man bei zu erwartenden Änderungen an CDR-Formaten von Netzwerkelementen diese nur einmalig an zentraler Stelle in die Strukturdateien einarbeiten braucht. Diese Änderungen stehen dann sofort allen Modulen zur Verfügung.

Die CDR-Strukturen werden in der Datenbank auf Tabellen abgebildet.

Es werden in der bevorzugten Ausführungsform folgende Arten von Strukturdateien unterschieden:
1. ASN.1-Strukturdatei, die ASN.1 codierte Datenformate beschreibt.
2. Nicht-ASN.1-Strukturdatei, die in einer erfindungsgemäßen Datenbeschreibungssprache vorliegt und alle nicht ASN.1-Datenformate beschreibt.

Zum Verarbeiten dieser Formate sind zusätzlich die formatspezifischen CDR-Decoder sowie CDR-Encoder notwendig. Die Strukturdateien können somit einer fortdauernden Pflege und Erweiterung für neue Netzwerkelemente und neue

Softwareversionen unterliegen.

Die CDR-Decoder konvertieren alle oftmals im binären Format vorliegenden CDRs in ein Datenbank lesbares Format, vorzugsweise in das ASCII-Format, das so genannte FAF-Format. In diesem Format werden die Feldnamen, Datenstrukturen und Datentypen dargestellt. Die Decoder sind vorzugsweise Batchprogramme. Die zu dekodierenden Formate werden vorzugsweise automatisch über Namenskonventionen für Eingabedateien bestimmt. Andere Analysen zur Bestimmung des Formates sind jedoch denkbar. Aus dem Dateinamen sollten der notwendige Netzelementtyp sowie die zugehörige Versionsnummer des Formates hervorgehen. Format und Version können jedoch auch abweichend von der Namenskonvention vorgegeben werden.

Der CDR-Decoder-Output (FAF-Format) wird, vorzugsweise ohne Zwischenspeicherung, als direkter Input für das Datenbankinterface verwendet. Dadurch wird das File-system der Rechner nur zum Lesen der Eingabedaten benötigt. Das aufwendige Speichern von Zwischenergebnissen entfällt.

Um eine möglichst große Anzahl von CDRs aus Dateien mit defekten Bereichen zu extrahieren, beinhalten die Decoder Funktionen zum Wiederaufsetzen während des Lesens einer Eingabedatei. Es werden Pattern (Suchmuster) festgelegt, die den Anfang von neuen Records beschreiben. Mit diesen Informationen versuchen die Decoder defekte Bereiche mit minimalem Verlust zu überspringen. Die Anzahl der Aufsetzversuche wird vorzugsweise in der Verwaltungsinformation zur CDR-Datei vermerkt. Je Format und Version ist ein Maximum von Aufsetzversuchen definiert. Nach Erreichen dieses Maximums wird das Decodieren der Eingabedatei abgebrochen.

Zur manuellen Behandlung von fehlerhaften Bereichen in CDR-Dateien sind Methoden in den Decodern enthalten, die fehlerhafte Bereiche von CDR-Dateien in unstrukturierter Form in die Datenbank schreiben. Durch Schneiden, d. h. durch Setzen von Anfangs- und Endmarken, werden korrupte Bereiche in den Eingabedaten gekennzeichnet. Die Benutzeroberfläche erlaubt, in einer bevorzugten Ausführungsform einzelne Bytes in unstrukturierten Bereichen in hexadezimaler Notation zu verändern.

CDRs, die geladen wurden, sind nur lesbar, um unabsichtliche Veränderungen ohne begonnene Korrektur zu vermeiden. Testfunktionen zur Prüfung der inhaltlichen Integrität einer CDR-Datei können beim Import pro Format automatisch oder manuell ausgeführt werden.

SQL-Abfragen beinhalten auch die Prüfung auf den NULL-Wert oder den 'Leer-Wert', um festzustellen, ob eine Spalte gefüllt ist. Um die Abfragen noch weiter verfeinern zu können, sind SQL-, PL/SQL-Funktionen verfügbar, die in der WHERE-Klausel verwendet werden können.

Suchabfragen werden über das CDR-Select-Kommando definiert und bauen hierarchisch aufeinander auf. Das bedeutet, dass jedes CDR-Select-Kommando auf einem anderen CDR-Select basiert und die Suchmenge über eine UND-Verknüpfung immer weiter eingeschränkt wird. Jede so definierte Suchmenge erhält vorzugsweise einen eigenen Namen, welcher als Referenz für weitere CDR-Selects benutzt werden kann. Die vollständigen SQL-Queries werden vom System automatisch erzeugt. Die ursprünglich geladene Gesamtmenge erhält den Namen Initial.

So ist z.B. eine automatische Query ein Header Trailer Check und Update am Beispiel vom TAP3-Standard.

Im Header Check wird beispielsweise für folgende Referenzdaten die korrekte Verwendung innerhalb der Call Detail Records überprüft.

| | |
|---|---|
| 1. | taxes |
| 2. | discounts |
| 3. | exchange rates |
| 4. | utc time offsets |
| 5. | rec entities |
| 6. | vas |
| 7. | message descriptions |
| 8. | called number analysis |

Für diese Daten sind innerhalb des TAP3 Formates Unterstrukturen definiert. D. h. im File sollen z. B. alle vorkommenden Taxes (Taxcodes, Taxrate, ...) definiert sein. Innerhalb der eigentlichen CDRs sollen nur diese Taxes referenziert werden.

Werden Taxes referenziert, die nicht definiert sind, wird eine warnung ausgegeben. Eine automatische Korrektur kann hier nicht stattfinden, da nicht entschieden werden kann, ob die Definition des Taxes fehlt, oder ob die Referenz im CDR fehlerhaft ist. Der PAT-Benutzer muss entweder die Tax in die Referenzstruktur hinzufügen (CDR INSERT) oder den Taxcode des CDR ändern (CDR UPDATE).

Der Trailer-Check überprüft, ob die im Trailer hinterlegten Summen mit den tatsächlich summierten Werten der CDRs übereinstimmen. Ausnahme ist der früheste und späteste "call timestamp".

Folgende Werte werden kontrolliert.

| | |
|---|---|
| 1. | earliest and latest call timestamp |
| 2. | total charges |
| 3. | total taxes |
| 4. | total discounts |
| 5. | call event detail counts |

Der Trailer wird nach jeder Änderung der CDRs (CDR INSERT, CDR UPDATE, CDR DELETE) und vor jedem export neu berechnet

Weitere automatische Queries sind denkbar und individuell auf dem SQL-Standard zu definieren.

Zur Sicherstellung der Konsistenz können Korrekturen vorzugsweise nur auf Ergebnismengen der Suche angewendet werden. Dazu ist es notwendig, eine Revision, d. h. eine Kopie, zu eröffnen. Das Neuerstellen einer Revision bewirkt, dass die Ergebnismenge in einen temporären, schreibbaren Datenbankbereich kopiert wird, in dem Änderungen mittels des CDR-Update-Kommandos durchgeführt werden können. Durch diese Vorbereitung wird jeder veränderte CDR mit seiner CDR-ID innerhalb der Datenbank vermerkt.

Da über die aus den Strukturdateien abgeleiteten Tabellendefinitionen alle Spalten optional sind, kann jede Spalte auf NULL gesetzt werden. Zusätzlich besteht die Möglichkeit, Felder abhängig von deren Datentyp auf einen 'Leer-Wert' zu setzen.

In der bevorzugten Ausführungsform wird das Löschen von CDRs indirekt bereitgestellt. Jede Tabellendefinition wird um ein Löschkennzeichen erweitert. Eine UPDATE-Anweisung setzt dieses Kennzeichen für zu löschende CDRs.

CDR-Dateien, in denen CDRS geändert wurden, werden als geändert markiert. In Abhängigkeit der Form des Exports können z. B. nur geänderte CDR-Dateien exportiert werden.

Korrekturen finden vorzugsweise nur auf Ergebnismengen (Revisionen) statt, da sonst eine Wiederholbarkeit nicht mehr gegeben ist. Um Revisionssicherheit zu erlangen, werden deshalb Veränderungen, vorzugsweise über SQL-UPDATE-Anweisungen oder über PL/SQL-Programme manuell oder automatisch vorgenommen. PL/SQL-Programme ermöglichen, Werte zu speichern und Platzhalter in UPDATE-Anweisungen mit Werten zu besetzen, bevor die Anweisung ausgeführt wird.

Korrekturen werden vorzugsweise nur in Verbindung mit einer Korrekturnummer vorgenommen, die einer Ergebnismenge zugeordnet wird. Zusammen mit dieser Nummer werden die Korrekturanweisungen und alle weiteren Aktionen abgespeichert. Protokolliert wird 'wer', 'was', 'wann', 'warum' und eine Summenstatistik. Jeder veränderte CDR wird mit Korrekturnummer und CDR-ID innerhalb der Datenbank protokolliert. Dieses ist vorteilhaft, um mehrfache Korrekturen des gleichen CDRs feststellen zu können. Der Export von Korrekturen wird vorzugsweise von dieser Protokolltabelle beeinflusst. Eine Lösung zum Duplikatsproblem ist in der Ausgabefunktion beschrieben.

Korrekturen werden vorzugsweise mit einem Namen und einer Beschreibung versehen und können mit einer jeweils neuen Korrekturnummer aufgerufen und wiederholt werden. Zur Beschleunigung kann verringertes Logging gesetzt werden. Bei Wiederverwendung einer Korrektur werden die 'was und warum'-Felder der Protokollierung mit den letzten Werten vorbesetzt.

Die geänderten CDRs werden aus der Datenbank exportiert und mit den formatspezifischen Encodern unter Verwendung der Strukturdefinition in das binäre Zielformat konvertiert. Die so geänderten Daten sind für weitere Verarbeitungsschritte in vorgegebenen Zielverzeichnissen zusammen mit der Protokollierung abgelegt. Die Ausgabe selbst bietet einige Optionen, wie z. B. die Ausgabe der ursprünglichen CDRs.

Logisch sind folgende Arten von Ausgaben zu unterscheiden.
1. Die Ausgabe beschränkt auf die korrigierten CDRs in eine neu erstellte Datei.
2. Die Ausgabe beschränkt auf die korrigierten CDRs unter Beibehaltung der ursprünglichen Dateinamen und
3. Die Ausgabe von kompletten Daten mit dem ursprünglichen Dateinamen, in die die geänderten und die nicht von den Änderungen betroffenen Daten in ihrer ursprünglichen Reihenfolge ausgegeben werden.

Die erste und zweite Art wird verwendet, wenn nur Teile einer Datei mit Fehlern behaftet waren, die Datei an sich aber im Abrechnungssystem verarbeitet wurde. Die dritte Art kann verwendet werden, um vom Abrechnungssystem als ganzes abgewiesene CDR-Dateien neu zu verarbeiten.

## Patentansprüche

1. Verfahren zur Analyse und anschließender Bearbeitung von einer Menge von Call Detail Records (CDRs),
- mit einem Initialisierungsschritt, bei dem aus einem ersten Speicherbereich Strukturinformationen der Call Detail Records geladen werden und anhand dieser eine relationale Datenbank aufgebaut wird, wobei hierarchische Strukturinformationen durch mindestens zwei miteinander rekursiv in Relation stehenden Tabellen dargestellt werden, die die Hierarchie abbilden,
- mit einem weiteren Schritt, bei dem aus einem zweiten Speicherbereich die vorzugsweise binär vorliegende Menge von Call Detail Records unter Benutzung eines Decoders in ein lesbares Format der Datenbank umgewandelt wird, insbesondere in das ASCII-Format,
- mit einem weiteren Schritt, bei dem vom Decoder bereitgestellte lesbare Call Detail Records entsprechend der Strukturinformationen in die Datenbank geladen werden, die im Initialisierungsschritt erzeugt wurde,
- mit einem weiteren Schritt, bei dem SQL-Queries und/oder Datenbankprozeduren verwendet werden, um fehlerhafte Call Detail Records zu bestimmen,
- mit einem weiteren Schritt, bei dem mit Hilfe der Strukturinformationen und einem formatspezifischen Encoder die Call Detail Records auf der Basis der Strukturinformation und der Datenbank im ursprünglichen Format, vorzugsweise im Binärformat, in einen dritten Speicherbereich zurückgespeichert werden.

2. Verfahren nach dem vorhergehenden Anspruch, **dadurch gekennzeichnet, dass** aus den Strukturdefinition Tabellendefinitionen abgeleitet werden.

3. Verfahren nach einem oder mehreren der vorhergehenden Ansprüche, **dadurch gekennzeichnet, dass** in den Strukturinformationen vorhandene hierarchische Grammatikkonstrukte, die Rekursion erlauben, durch eine 1:N Verbindung dargestellt werden.

4. Verfahren nach einem oder mehreren der vorhergehenden Ansprüche, **dadurch gekennzeichnet, dass** der Decoder zum Einlesen der Menge von Call Detail Records Binärdaten nach Fehlern, insbesondere nach Protokollfehlern, durchsucht, um diese zu markieren, und um ggf. den Einleseschritt neu anzusetzen.

5. Verfahren nach dem vorhergehenden Anspruch, **dadurch gekennzeichnet, dass** die fehlerhaften Bereiche in eine ausgewiesene Datenstruktur geschrieben werden.

6. Verfahren nach einem oder mehreren der vorhergehenden Ansprüche, **dadurch gekennzeichnet, dass** benutzerspezifische Erweiterungen, insbesondere SQL-Select-Statements, für die Suche von defekten Call Detail Records individuell abspeicherbar sind.

7. Verfahren nach einem oder mehreren der vorhergehenden Ansprüche, **dadurch gekennzeichnet, dass** bei einer Änderung ein Duplikat des Call Detail Records angelegt wird
und/oder
eine Protokollierung stattfindet, indem vorzugsweise der Bearbeiter und/oder der Zeitraum und/oder eine Protokollnummer vergeben wird, und/oder
bei einer Löschung ein Löschkennzeichen vergeben wird.

8. Verfahren nach einem oder mehreren der vorhergehenden Ansprüche, **dadurch gekennzeichnet, dass** die Eingabe und/oder Ausgabe in eine Datei erfolgt, die vorzugsweise im Binärformat die Menge von Call Details Records speichert.

9. Verfahren nach einem oder mehreren der vorhergehenden Ansprüche, **dadurch gekennzeichnet,**
**dass** automatische Korrekturen bei dem Vorliegen bestimmbarer Muster durchgeführt werden.

10. Verfahren nach einem oder mehreren der vorhergehenden Ansprüche, **dadurch gekennzeichnet,**
**dass** eine Änderung der Strukturdatei sich auf den Aufbau der Datenbanktabellen und/oder auf die Funktion des Encoders und/oder auf die Funktion des Decoders auswirken.

11. Verfahren nach einem oder mehreren der vorhergehenden Ansprüche, **dadurch gekennzeichnet,**
**dass** die Datenbank dynamisch bei jedem erneuten Einlesen einer Datei erzeugt wird oder einmalig für jeden Strukturtyp, der durch eine Strukturinformation bestimmt ist.

12. Verfahren nach einem oder mehreren der vorhergehenden Ansprüche, **dadurch gekennzeichnet,**
**dass** Views in Abhängigkeit der Strukturinformationen für eine Datenbank generiert werden.

13. Software für einen Computer, **dadurch gekennzeichnet,**
**dass** ein Verfahren nach einem oder mehreren der vorhergehenden Ansprüche auf einem Computer ausgeführt wird, falls die Software auf dem Computer gestartet wird.

14. Datenträger für einen Computer, **gekennzeichnet durch** die Speicherung einer Software nach dem vorhergehenden Softwareanspruch 13.

15. Computersystem, **gekennzeichnet durch** eine Einrichtung für den Ablauf eines Verfahrens nach einem oder mehreren der vorhergehenden Verfahrensansprüche 1 bis 12, wenn eine Software nach vorhergehen dem Softwareranspruch 13 auf dem Computersystem ausgeführt wird.

## Claims

1. Method for analysing and subsequently editing a set of call detail records (CDRs),
- having an initialization step in which structure information for the call detail records is loaded from a first memory area and this structure information is used to set up a relational database, with hierarchic structure information being shown by at least two recursively related tables which map the hierarchy,
- having a further step in which the set, which is preferably in binary form, of call detail records from a second memory area is converted into a readable format for the database, particularly into the ASCII format, using a decoder,
- having a further step in which readable call detail records provided by the decoder are loaded in line with the structure information into the database which was produced in the initialization step,
- having a further step in which SQL queries and/or database procedures are used in order to determine erroneous call detail records,
- having a further step in which the structure information and a format-specific encoder are used to store back the call detail records into a third memory area in the original format, preferably in the binary format, on the basis of the structure information and the database.

2. Method according to the preceding claim, **characterized in that** the structure definition is used to derive table definitions.

3. Method according to one or more of the preceding claims, **characterized in that** hierarchic grammar constructs in the structure information which allow recursion are represented by a 1:N connection.

4. Method according to one or more of the preceding claims, **characterized in that** the decoder reads in the set of call detail records by searching binary data for errors, particularly for log errors, in order to mark them and in order to restart the read-in step if appropriate.

5. Method according to the preceding claim, **characterized in that** the erroneous areas are written to a designated data structure.

6. Method according to one or more of the preceding claims, **characterized in that** user-specific extensions, particularly SQL select statements, for searching for erroneous call detail records can be stored individually.

7. Method according to one or more of the preceding claims, **characterized in that** a change involves a duplicate of the call detail record being created and/or
logging takes place by virtue of preferably the editor and/or the period and/or a log number being assigned, and/or
a deletion involves a deletion flag being assigned.

8. Method according to one or more of the preceding claims, **characterized in that** the input and/or output is made to a file which stores the set of call detail records, preferably in binary format.

9. Method according to one or more of the preceding claims, **characterized in that** automatic corrections are made when determinable patterns are present.

10. Method according to one or more of the preceding claims, **characterized in that** a change in the structure file affects the design of the database tables and/or the operation of the encoder and/or the operation of the decoder.

11. Method according to one or more of the preceding claims, **characterized in that** the database is produced dynamically whenever a file is read in again or once for each structure type which is determined by a piece of structure information.

12. Method according to one or more of the preceding claims, **characterized in that** views are generated on the basis of the structure information for a database.

13. Software for a computer, **characterized in that** a method according to one or more of the preceding claims is performed on a computer if the software is started on the computer.

14. Data storage medium for a computer, **characterized by** storage of a piece of software according to preceding software Claim 13.

15. Computer system, **characterized by** a device for the execution of a method according to one or more of preceding method Claims 1 to 12 when a piece of software according to preceding software Claim 13 is executed on the computer system.

## Revendications

1. Procédé pour l'analyse et le traitement subséquent d'une quantité de CDR (enregistrements détaillés des appels),
- avec une étape d'initialisation, lors de laquelle des informations de structure des CDR sont chargées à partir d'une première zone de mémoire et une base de données relationnelle est construite à l'aide de celles-ci, des informations de structure hiérarchiques étant représentées par au moins deux tableaux qui sont en relation ensemble de manière récursive et forment la hiérarchie,
- avec une étape supplémentaire, lors de laquelle la quantité se trouvant de préférence sous forme binaire de CDR provenant d'une deuxième zone de mémoire est convertie en utilisant un décodeur en un format lisible de la base de données, notamment en le format ASCII,
- avec une étape supplémentaire, lors de laquelle les CDR lisibles fournis par le décodeur correspondant aux informations de structure sont chargés dans la base de données qui a été générée lors de l'étape d'initialisation,
- avec une étape supplémentaire, lors de laquelle des requêtes SQL et/ou des procédures de base de données sont utilisées afin de déterminer les CDR défectueux,
- avec une étape supplémentaire, lors de laquelle les CDR sont activés à l'aide des informations de structure et d'un encodeur spécifique au format, sur la base de l'information de structure et de la base de données au format d'origine, de préférence au format binaire, dans une troisième zone de mémoire.

2. Procédé selon la revendication précédente, **caractérisé en ce que** des définitions de tableau sont dérivées de la définition de structure.

3. Procédé selon l'une quelconque ou plusieurs des revendications précédentes, **caractérisé en ce que** des constructions grammaticales hiérarchiques présentes dans les informations de structure qui permettent une récursivité sont représentées par une liaison 1/N.

4. Procédé selon l'une quelconque ou plusieurs des revendications précédentes, **caractérisé en ce que** le décodeur pour la lecture de la quantité de CDR parcoure des données binaires à la recherche d'erreurs, notamment d'erreurs de protocole, afin de les marquer et afin de démarrer éventuellement de nouveau l'étape de lecture.

5. Procédé selon la revendication précédente, **caractérisé en ce que** les zones défectueuses dans une structure de données identifiée sont enregistrées.

6. Procédé selon l'une quelconque ou plusieurs des revendications précédentes, **caractérisé en ce que** des extensions spécifiques à l'utilisateur, notamment des instructions Select SQL, pour la recherche de CDR défectueux peuvent être mémorisées individuellement.

7. Procédé selon l'une quelconque ou plusieurs des revendications précédentes, **caractérisé en ce que** lors d'une modification, un double du CDR est constitué
et/ou
une journalisation a lieu **en ce que** de préférence l'utilisateur autorisé et/ou la période et/ou un numéro de protocole est issu et/ou un signe d'effacement est issu en cas d'effacement.

8. Procédé selon l'une quelconque ou plusieurs des revendications précédentes, **caractérisé en ce que** la saisie et/ou la sortie s'effectue dans un fichier qui mémorise de préférence au format binaire la quantité de CDR.

9. Procédé selon l'une quelconque ou plusieurs des revendications précédentes, **caractérisé en ce que** des corrections automatiques sont effectuées lors de la présence de modèles attribuables.

10. Procédé selon l'une quelconque ou plusieurs des revendications précédentes, **caractérisé en ce qu'**une modification du fichier de structure se répercute sur la structure des tableaux de base de données et/ou sur la fonction de l'encodeur et/ou sur la fonction du décodeur.

11. Procédé selon l'une quelconque ou plusieurs des revendications précédentes, **caractérisé en ce que** la base de données est générée de manière dynamique à chaque nouvelle lecture d'un fichier ou une seule fois pour chaque type de structure qui est déterminé par une information de structure.

12. Procédé selon l'une quelconque ou plusieurs des revendications précédentes, **caractérisé en ce que** des vues sont générées en fonction des informations de structure pour une base de données.

13. Logiciel pour un ordinateur, **caractérisé en ce qu'**un procédé selon l'une quelconque ou plusieurs des revendications précédentes est exécuté sur un ordinateur au cas où le logiciel est démarré sur l'ordinateur.

14. Support de données pour un ordinateur, **caractérisé par** la mémorisation d'un logiciel selon la revendication de logiciel précédente 13.

15. Système informatique, **caractérisé par** un dispositif pour le déroulement d'un procédé selon l'une quelconque ou plusieurs des revendications précédentes 1 à 12, lorsqu'un logiciel selon la revendication de logiciel précédente 13 est exécuté sur le système informatique.
